# EUROPEAN PATENT SPECIFICATION

(11) **EP 2 528 419 B1**
(45) Date of publication and mention of the grant of the patent: **28.11.2018**
(21) Application number: 12004021.7
(22) Date of filing: 23.05.2012
(51) Int. Cl.: H05B 33/08

(54) **Power supply device for a lamp and vehicle including the same**
Stromversorgungsvorrichtung für eine Lampe und Fahrzeug damit
Dispositif de source électrique pour lampe et vehicle le comprenant

(30) Priority: 24.05.2011 JP 2011115536; 12.10.2011 JP 2011225084
(43) Date of publication of application: 28.11.2012
(73) Proprietor: Panasonic Intellectual Property Management Co., Ltd., Osaka-shi, Osaka 540-6207 (JP)
(72) Inventor: Kambara, Takashi, Osaka 540-6207, (JP)
(74) Representative: Samson & Partner Patentanwälte mbB

(56) References cited:
- EP-A2- 1 850 467
- WO-A1-2011/055533
- JP-A- H05 176 532
- JP-A- 2007 295 641
- JP-A- 2009 284 721
- US-A1- 2004 080 273
- US-A1- 2006 164 868
- US-A1- 2008 284 346
- US-A1- 2009 026 977

## Description

### Field of the Invention

The present invention relates to a power supply device and a lamp and a vehicle including same.

### Background of the Invention

Conventionally, there is provided a power supply device used in a vehicle (see, e.g., Japanese Patent Application Publication No. 2009-284721 (Paragraphs [0024] to [0044], and FIG. 1)). This power supply device includes a DC-DC conversion circuit which includes a transformer and a switching element and converts an input DC voltage into a desired DC voltage, an output adjusting unit which outputs a PWM signal to control an on/off operation of the switching element based on the feedback output voltage of the DC-DC conversion circuit, and an output abnormality determination unit which detects an abnormality in the output voltage of the DC-DC conversion circuit.

In this power supply device for use in a vehicle, an output line of the power supply device may be in contact with the ground (negative electrode (-) side) of a DC power supply source (battery) (called a ground-side fault) or in contact with a positive electrode (+) side of the DC power supply source (called an positive-side fault) due to, e.g., faulty wiring or short circuit caused by degradation or pinching of a wire, and the power supply device may be broken. However, in accordance with the power supply device described in Japanese Patent Application Publication No. 2009-284721, if such accident has occurred, an abnormality in the output voltage is detected by the output abnormality determination unit. Accordingly, a circuit protection can be accomplished by stopping the switching operation of the switching element when the abnormality is detected.

The power supply device described in Japanese Patent Application Publication No. 2009-284721 can implement the circuit protection by stopping the switching operation of the switching element when the ground-side fault or the positive-side fault has occurred, but it is expensive because the transformer is used in the conversion circuit.

EP1850462A2 discloses a switched mode power converter with transformerless safety isolation.

US 2006/0164868 A1 discloses a power supply including a supply inductor and a first capacitor coupled to form a resonant circuit to generate a resonant waveform in a resonant operation, during a first portion of an operation cycle of the power supply. A charge storage element develops an output voltage to energize a load. A rectifier is coupled to the charge storage element and to the resonant circuit and is responsive to the resonant waveform for applying the output voltage back to the resonant circuit to interrupt the resonant operation, at an end time of the operation cycle first portion, when the resonant waveform produces a first change of state in the rectifier.

JP H05 176532 A discloses a power supply circuit which utilizes both voltage and current resonance operations to reduce switching loss.

### Summary of the Invention

While the invention is defined in the independent claims, further aspects of the invention are set forth in the dependent claims, the following description and the drawings.

In view of the above, the present invention provides a power supply device capable of enhancing safety while minimizing the cost, and a lamp and vehicle including same.

In accordance with an embodiment of the present invention, there is provided a power supply device including: a series circuit including a first capacitor and
a first and a second inductor respectively connected to both terminals of the first capacitor; a switching element, one terminal of which is connected to a connection node between one terminal of the first inductor and the first capacitor; a rectifier whose anode is connected to a connection node between the first capacitor and one terminal of the second inductor; and a second capacitor connected between the other terminal of the switching element and a cathode of the rectifier. A DC power supply source is connected between the other terminal of the first inductor and the other terminal of the switching element such that the other terminal of the first inductor is connected to a positive electrode side of the DC power supply source, and a load is connected between the other terminal of the second inductor and the cathode of the rectifier.

Further, a resistor may be connected in parallel to the second capacitor.

Further, an electrostatic capacitance of the second capacitor may be greater than an electrostatic capacitance of the first capacitor.

Further, the power supply device may further include a control circuit for controlling an on/off operation of the switching element. The control circuit may stop the on/off operation of the switching element if a potential at a connection node between the second capacitor and the rectifier is higher than a reference value.

Further, the power supply device may further include a control circuit for controlling an on/off operation of the switching element, and the control circuit may include an output current detection circuit which detects an output current of the power supply device based on a potential generated across a resistor connected between the load and a connection node between the second capacitor and the rectifier. Further, the control circuit may control the on/off operation of the switching element such that an output of the output current detection circuit is maintained at a predetermined value, and may stop the on/off operation of the switching element if a state where the output of the output current detection circuit becomes lower than a threshold is continuously maintained for a predetermined period of time.

Further, the power supply device may further include a control circuit for controlling an on/off operation of the switching element, and the control circuit may include an output current detection circuit which detects an output current of the power supply device based on a potential generated across a resistor connected between the load and the connection node between the second capacitor and the rectifier. Further, the control circuit may control the on/off operation of the switching element such that an output of the output current detection circuit is maintained at a predetermined value, and may stop the on/off operation of the switching element if a state where the potential at the connection node between the second capacitor and the rectifier becomes higher than the reference value is continuously maintained for a predetermined period of time.

Further, the load may be a lighting load including one or more semiconductor light emitting elements

In accordance with another embodiment of the present invention, there is provided a lamp including the power supply device described above.

In accordance with still another embodiment of the present invention, there is provided a vehicle including the lamp described above.

In accordance with the present invention, there is an effect of providing a power supply device with enhanced safety while minimizing the cost, and a lamp and vehicle including same.

### Brief Description of the Drawings

The objects and features of the present invention will become apparent from the following description of embodiments, given in conjunction with the accompanying drawings, in which:
FIGS. 1A and 1B present a schematic circuit diagram showing a basic configuration of a power supply device in accordance with a first example and a schematic circuit diagram to which this basic configuration has been applied, respectively;
FIGS. 2A and 2B are circuit diagrams for explaining an operation of the power supply device;
FIG. 3 shows waveform diagrams (a) to (g) for explaining the operation of the power supply device;
FIG. 4 shows waveform diagrams (a) to (d) for explaining the operation of the power supply device when a ground-side fault has occurred;
FIG. 5 shows waveform diagrams (a) to (d) for explaining another operation of the power supply device when a ground-side fault has occurred;
FIG. 6 is a schematic circuit diagram of a power supply device in accordance with a second example;
FIG. 7 shows waveform diagrams (a) to (g) for explaining an operation of the power supply device shown in FIG. 6;
FIG. 8 is a schematic circuit diagram of a power supply device in accordance with a first embodiment of the present invention;
FIG. 9 is a schematic circuit diagram of a power supply device in accordance with a second embodiment of the present invention;
FIG. 10 is a cross-sectional view of a lamp in accordance with a third embodiment of the present invention; and
FIG. 11 is an external perspective view of a vehicle in accordance with a fourth embodiment of the present invention.

### Detailed Description of the Embodiments

Hereinafter, embodiments of the present invention will be described with reference to the drawings which form a part hereof.

### (First example)

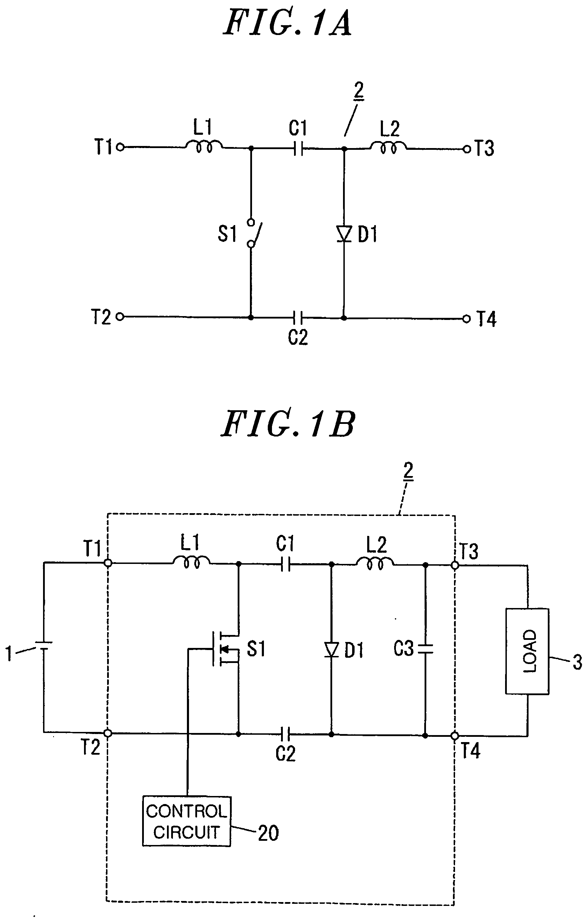

FIG. 1A is a schematic circuit diagram showing a basic configuration of a power supply device in accordance with a first example. FIG. 1B is a schematic circuit diagram to which this basic configuration has been applied.

A power supply device 2 includes a series circuit of a first capacitor C1 and a first and a second inductor L1 and L2 respectively connected to both terminals of the first capacitor C1, and a switching element S1 having one terminal connected to a connection node between one terminal of the first inductor L1 and the first capacitor C1.

The power supply device 2 further includes a diode (rectifier) D1 whose anode is connected to a connection node between the first capacitor C1 and one terminal of the second inductor L2, and a second capacitor C2 connected between the other terminal of the switching element S1 and a cathode of the diode D1. In addition, the power supply device 2 includes a control circuit 20 to control an on/off operation of the switching element S1. Although, e.g., a voltage-driven MOSFET is used as the switching element S1 in this example various elements may be used as the switching element S1 without being limited to the MOSFET. Further, various elements may be used as the rectifier without being limited to the diode D1.

An input terminal T1 is connected to the other terminal of the first inductor L1 (opposite to the side connected to the first capacitor C1). Connected to the input terminal T1 is a positive electrode (plus side) of a DC power supply source (e.g., a battery of 12V) 1. An input terminal T2 is connected to the other terminal of the switching element S1 (the side connected to the second capacitor C2). Connected to the input terminal T2 is a negative electrode (minus side) of the DC power supply source 1.

An output terminal T3 is connected to the other terminal of the second inductor L2 (opposite to the side connected to the first capacitor C1). Connected to the output terminal T3 is one terminal of a load 3. An output terminal T4 is connected to the cathode of the diode D1. Connected to the output terminal T4 is the other terminal of the load 3. Further, in an example shown in FIG. 1B, a third capacitor C3 (smoothing capacitor) is connected between the output terminals of the power supply device 2.

The control circuit 20 outputs a driving signal with a frequency of several 100 kHz to the switching element S1 in consideration of, e.g., miniaturization of circuit components to turn on/off the switching element S1 at a high frequency. Specifically, the control circuit 20 controls the on/off operation of the switching element S1 through fixed frequency PWM control (varying an on-duty of the switching element S1). To explain further, although not shown, a desired output can be obtained by detecting an input current or an input voltage to the power supply device 2 and controlling the on/off operation of the switching element S1 so that the input current or the input voltage is to be maintained at a predetermined value, or detecting an output current or an output voltage from the power supply device 2 and controlling the on/off operation of the switching element S1 so that the output current or the output voltage is maintained at a predetermined value. Further, since the control circuit 20 has adopted a conventional well-known configuration, a detailed description thereof will be omitted.

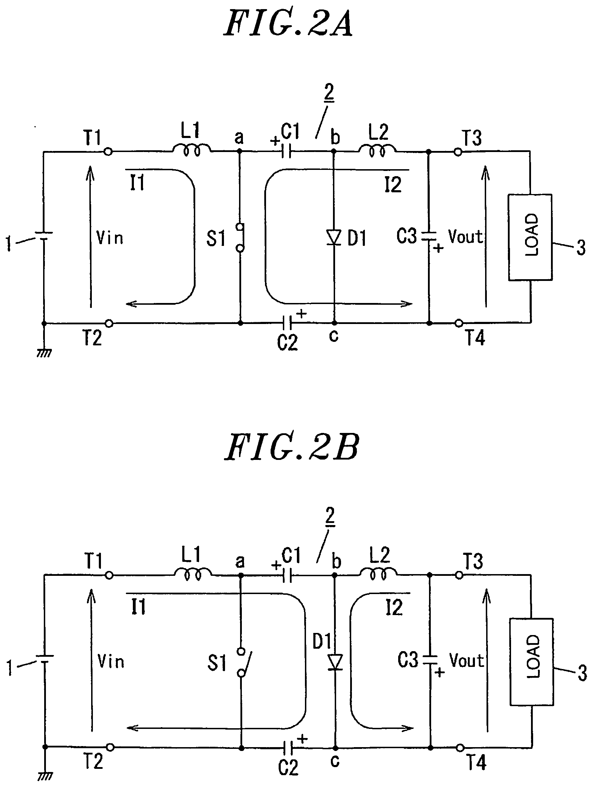

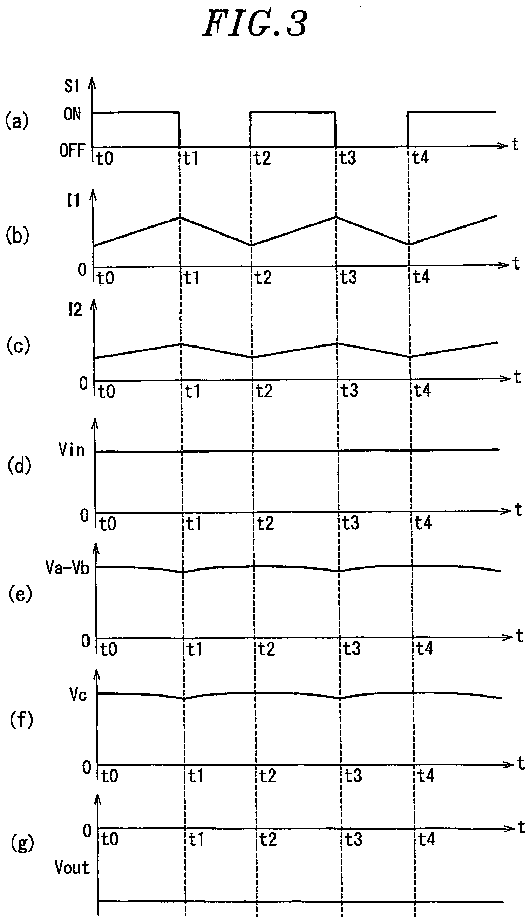

FIGS. 2A and 2B present circuit diagrams for explaining the operation of the power supply device 2. FIG. 2A shows a case where the switching element S1 is turned on, and FIG. 2B shows a case where the switching element S1 is turned off. Further, sign +'s in FIGS. 2A and 2B indicates the polarity of the voltage generated in the first to third capacitors C1 to C3. Furthermore, in FIGS. 2A and 2B, Vin and Vout represent an input voltage to the power supply device 2 and an output voltage from the power supply device 2 respectively, and I1 and I2 represent a current flowing through the first inductor L1 and a current flowing through the second inductor L2, respectively. Further, FIG. 3 shows waveform diagrams (a) to (g) for explaining the operation of the power supply device 2. Hereinafter, the operation of the power supply device 2 will be described with reference to FIGS. 2A and 2B and (a) to (g) of FIG. 3.

At time t0, when the control circuit 20 turns on the switching element S1, the current I1 flowing through the first inductor L1 increases with time, and energy is stored in the first inductor L1. At this time, energy stored in the first and the second capacitor C1 and C2 in an OFF period prior to time t0 is supplied to the load 3 through the switching element S1. Further, at this time, the current I2 flowing through the second inductor L2 increases with time, and energy is stored in the second inductor L2. Accordingly, a voltage Va-Vb of the first capacitor C1 and a voltage Vc of the second capacitor C2 are reduced.

At time t1, when the control circuit 20 turns off the switching element S1, the energy is transferred through the diode D1 to be stored in the first inductor L1 is stored in the first and the second capacitor C1 and C2. As a result, the voltage Va-Vb of the first capacitor C1 and the voltage Vc of the second capacitor C2 increase, and the current I1 decreases with time. Further, at this time, the energy stored in the second inductor L2 is transferred through the diode D1 to be supplied to the load 3, and the current I2 decreases with time. Even after time t2, an electric power can be supplied to the load 3 through the same operation by repeating the on/off operation of the switching element S1 in the same way.

Here, if the first and the second capacitor C1 and C2 have the same capacitance, same voltages are respectively generated in the first and the second capacitor C1 and C2 in terms of energy, and FIG. 3 shows waveforms (a) to (g) in this case. In other words, the voltage Va-Vb of the first capacitor C1 and the voltage Vc of the second capacitor C2 have the same waveform (see (e) and (f) of FIG. 3). Further, in the circuit configuration and operation in accordance with the present example the final output voltage Vout becomes negative (see (g) of FIG. 3), and a value obtained by adding the voltages Va-Vb and Vc of the first and the second capacitor C1 and C2 is substantially equal to a value obtained by adding absolute values of the input voltage Vin and the output voltage Vout.

Further, in the above description, a mode (continuous current mode) in which the currents I1 and I2 respectively flowing through the first and the second inductor L1 and L2 continuously flow without becoming zero has been illustrated as an example in order to facilitate understanding of the basic operation of the power supply device 2. Further, the output voltage Vout is obtained as a value which has been completely smoothed by the third capacitor C3. In practice, however, each of the pulsations of the currents I1 and I2 increases or becomes more flat by constants of the first and the second capacitor C1 and C2 or the first and the second inductor L1 and L2, a driving frequency of the switching element S1, an impedance of the load 3, or the like, but the basic operation is same as that described in the present example.

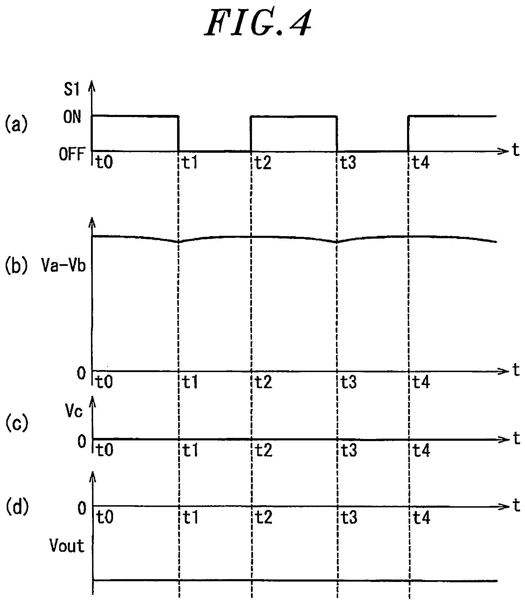

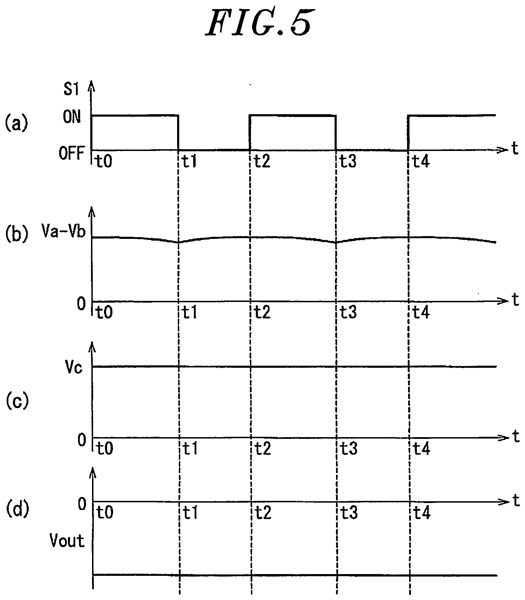

Next, an operation when a ground-side fault or a positive-side fault has occurred at the output terminal T3 or the output terminal T4 of the power supply device 2 will be described with reference to FIGS. 4 and 5.

FIG. 4 illustrates operation waveform diagrams when a ground-side fault has occurred at the output terminal T4. In this case, since the potential of the output terminal T4 is fixed to that of the ground (negative electrode) of the DC power supply source 1 due to the ground-side fault, the voltage Vc of the second capacitor C2 becomes zero as a result (see (c) of FIG. 4), while the voltage Va-Vb of the first capacitor C1 increases by a corresponding amount (see (b) of FIG. 4).

FIG. 5 illustrates operation waveform diagrams when a ground-side fault has occurred at the output terminal T3. In this case, since the potential of the output terminal T3 is fixed to that of the ground (negative electrode) of the DC power supply source 1 due to the ground-side fault, the voltage Vc of the second capacitor C2 becomes a potential determined by the output voltage Vout, while the voltage Va-Vb of the first capacitor C1 is roughly equivalent to the voltage of the input voltage Vin.

In addition, although a case where a positive-side fault has occurred at the output terminal T4 is not shown, in such case, the potential of the output terminal T4 is fixed to the positive potential of the DC power supply source 1 due to the positive-side fault. Further, although a case where a positive-side fault has occurred at the output terminal T3 is not shown, in such case, the potential of the output terminal T3 is fixed to the positive potential of the DC power supply source 1 due to the positive-side fault.

Also in any case of the above, by controlling the on/off operation of the switching element S1 if necessary, it is possible to continuously supply an electric power to the load 3.

Thus, in accordance with this example the circuit is configured to include the first and the second inductor L1 and L2 and the first and the second capacitor C1 and C2, so that the input side is DC-wisely isolated from the output side. Accordingly, there is no need to employ a transformer as in the conventional example and it becomes possible to correspondingly suppress the cost.

Further, in this example, since the input side is DC-wisely isolated from the output side by the first and the second capacitor C1 and C2, for example, even if a ground-side fault or a positive-side fault occurs on the output side, it is possible to provide the power supply device 2 with enhanced safety without giving an impact on the input side. Furthermore, in this embodiment, since the first inductor L1 of the input side and the second inductor L2 of the output side are connected in series, it is possible to suppress, to a low level, the voltage ripple and the currents of the input side and output side. Also, in accordance with this example, it is possible to step up or step down the voltage of the DC power supply source 1 to a voltage suitable for the load 3.

Further, although a case where the first and the second capacitor C1 and C2 have the same capacitance has been illustrated in this example it is possible to make the voltage generated in the first capacitor C1 different from that generated in the second capacitor C2 by varying the electrostatic capacitances of the first and the second capacitor C1 and C2. For example, if it is desired to make the potential at the output terminal T4 close to a ground level as much as possible, it can be achieved by making the electrostatic capacitance of the second capacitor C2 larger than the electrostatic capacitance of the first capacitor C1. In other words, the voltage Vc of the second capacitor C2 can be set to a low level depending on a capacitance ratio of the first capacitor C1 and the second capacitor C2. In addition, varying the electrostatic capacitances of the first and the second capacitor C1 and C2 is effective, e.g., when a range of the output voltage is desired to be set to a predetermined range. Further, a method of controlling the switching element S1 by using the control circuit 20 is not limited to the PWM control, and various methods (e.g., frequency control) may be used.

### (Second example)

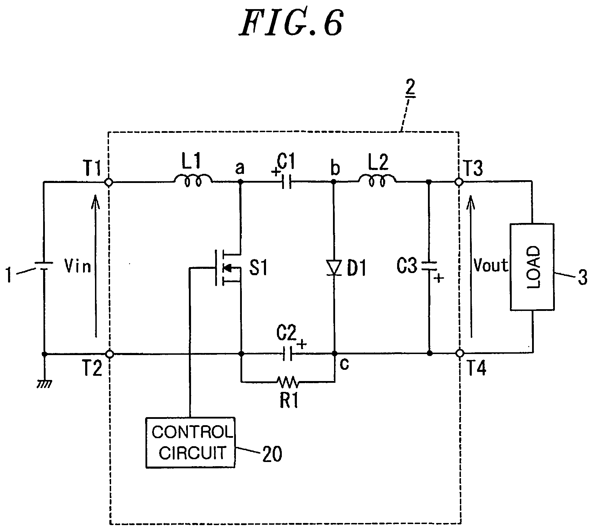

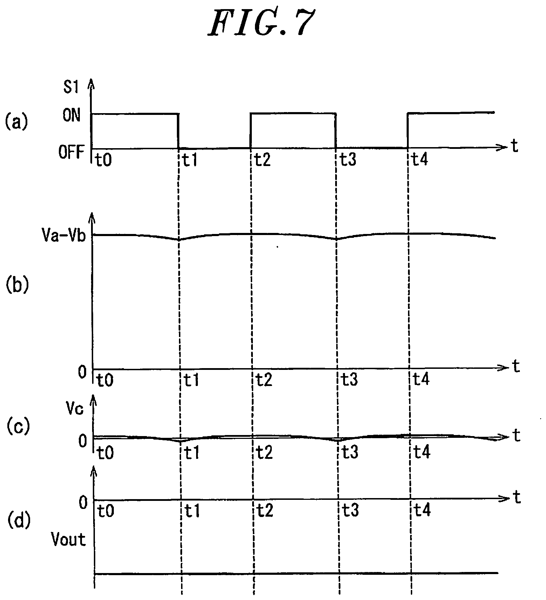

A second example of the power supply device 2 will be described with reference to FIGS. 6 and 7.

FIG. 6 is a schematic circuit diagram of the power supply device 2 in accordance with a second example. The power supply device 2 includes a series circuit of the first capacitor C1 and the first and the second inductor L1 and L2, the switching element S1, the diode (rectifier) D1, the second capacitor C2, the third capacitor C3, and a first resistor R1 connected in parallel to the second capacitor C2. By connecting the first resistor R1 in parallel with the second capacitor C2, the voltage Vc of the second capacitor C2 can be set to a value based on a resistance value of the first resistor R1.

FIG. 7 illustrates operation waveform diagrams when the resistance value of the first resistor R1 is set to a relatively small value (e.g., 100 Ω or less). In this case, the voltage Vc of the second capacitor C2 becomes substantially zero (see (c) of FIG. 7), and the voltage Va-Vb of the first capacitor C1 increases by a corresponding amount as described above in the first embodiment (see (b) of FIG. 7). In this way, by setting the resistance value of the first resistor R1 to a relatively small value, the potential of the output terminal T4 can be lowered to that of a ground level. Further, by appropriately selecting the resistance value of the first resistor R1 depending on an abnormal state to be detected (e.g., ground-side fault or positive-side fault), it is possible to detect the abnormal state.

On the other hand, if the resistance value of the first resistor R1 is set to a relatively large value (e.g., 1 KΩ), the voltage Vc of the second capacitor C2 becomes a voltage pulsating in a range of several volts.

Further, in this example, by making the electrostatic capacitance of the second capacitor C2 larger than the electrostatic capacitance of the first capacitor C1, it is possible to reduce the ripple of the voltage Vc of the second capacitor C2 and it is effective when it is desired to obtain a voltage close to zero (including the ripple).

### (First Embodiment)

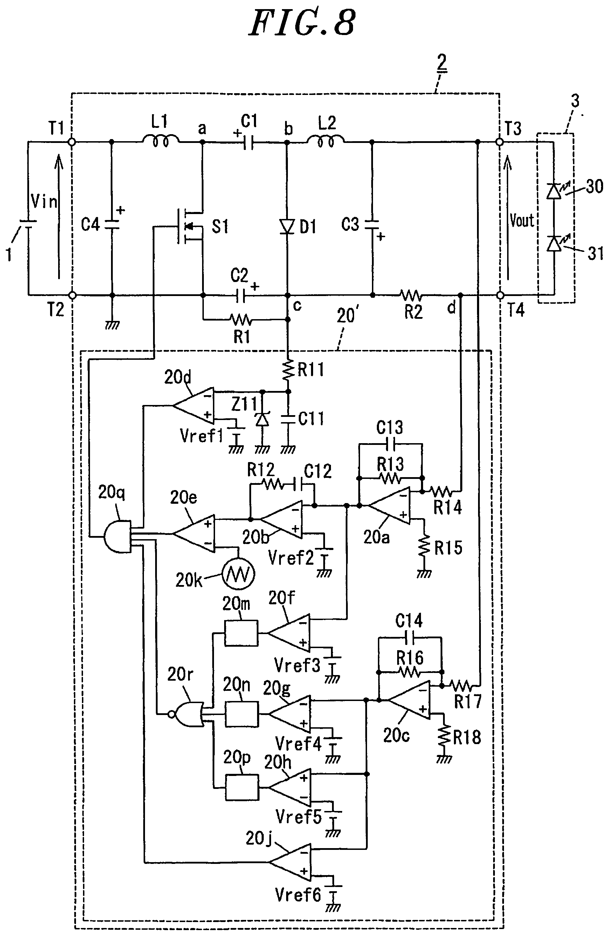

A first embodiment of the power supply device 2 will be described with reference to FIG. 8.

FIG. 8 is a schematic circuit diagram of the power supply device 2 in accordance with a third embodiment of the present invention. The power supply device 2 includes a series circuit of the first capacitor C1 and the first and the second inductor L1 and L2, the switching element S1, the diode (rectifier) D1 and the second capacitor C2. Further, the power supply device 2 includes the third and a fourth smoothing capacitor C3 and C4, the first resistor R1 connected in parallel to the second capacitor C2, a second resistor R2 connected between the second capacitor C2 and the output terminal T4, and a control circuit 20'. In this embodiment, the load 3 is a lighting load, and the power supply device 2 is a lighting device that supplies lighting power to the lighting load 3.

The lighting load 3 includes, e.g., a plurality of (two in FIG. 8) LED modules 30 and 31 which are connected in series. Each of the LED modules 30 and 31 includes four LED chips (semiconductor light emitting elements) connected in series.

Hereinafter, a configuration of the control circuit 20' in accordance with an embodiment of the present invention will be described in detail. The control circuit 20' includes a first inverting amplifier circuit having an operational amplifier 20a, a capacitor C13 and resistors R13 and R14 and functioning as an output current detection circuit, and a first error operational circuit having an operational amplifier 20b, a capacitor C12 and a resistor R12. Further, the control circuit 20' includes a comparator 20e which compares an output of the first error operational circuit with a high frequency reference oscillation signal from an oscillator (high frequency oscillation circuit) 20k and determines a duty of a driving signal of the switching element S1 such that an output value from the first inverting amplifier circuit is equal to a reference voltage Vref2.

Connected to an inverting input terminal of the operational amplifier 20a of the first inverting amplifier circuit is the second resistor R2 provided to detect the output current of the power supply device 2, thereby realizing a feedback control such that the output current is maintained at a predetermined constant current.

Next, a first feature of the control circuit 20' in accordance with this embodiment will be described. The control circuit 20' includes a comparator 20d having an inverting input terminal to which the voltage Vc of the second capacitor C2 through an RC filter having a resistor R11 and a capacitor C11 is inputted. By comparing the voltage Vc with a reference voltage Vref1, it is possible to detect an abnormality such as a ground-side fault or a positive-side fault that may occur at the output terminal T3 or T4. When the ground-side fault or the positive-side fault is detected, an output of the comparator 20d is changed from a high level to a low level. Consequently, an output of an AND circuit 20q becomes a low level, and the switching element S1 is turned off by this signal of low level to stop the switching operation.

In this embodiment, the reference voltage Vref1 corresponds to a first reference value. Further, a voltage applied to the inverting input terminal of the comparator 20d may become excessive depending on a mode in which the abnormality occurs and, thus, a Zener diode Z11 inserted between the inverting input terminal of the comparator 20d and the ground is provided to protect the comparator 20d.

Here, an operation when the ground-side fault or the positive-side fault has occurred at the output terminal T3 or T4 will be described. First, when the ground-side fault has occurred at the output terminal T3, the potential of the output terminal T3 is fixed to the ground (negative electrode) of the DC power supply source 1, so that the voltage Vc across the third capacitor C3 (voltage of the second capacitor C2) increases significantly. When the ground-side fault or the positive-side fault has occurred, the voltage Vc is greater than the reference voltage Vref1 of the comparator 20d. Accordingly, a signal of low level is outputted from the comparator 20d, and the switching element S1 is turned off by this signal of low level to stop the switching operation.

Further, when the positive-side fault has occurred at the output terminal T3, the potential of the output terminal T3 is fixed to the positive potential of the DC power supply source 1 and, moreover, the potential of the voltage Vc across the third capacitor C3 increases. Accordingly, as described above, a signal of low level is outputted from the comparator 20d, and the switching element S1 is turned off by this signal of low level to stop the switching operation.

Further, when the positive-side fault has occurred at the output terminal T4, the potential of the output terminal T4 is fixed to the positive potential of the DC power supply source 1, and the potential of the voltage Vc across the third capacitor C3 increases significantly. Accordingly, as described above, a signal of low level is outputted from the comparator 20d, and the switching element S1 is turned off by this signal of low level to stop the switching operation.

Furthermore, when the ground-side fault has occurred at the output terminal T4, the first resistor R1 and the second resistor R2 are connected in parallel effectively, and a ground-side fault current flows through the lighting load 3 through a parallel circuit of the first and the second resistor R1 and R2 due to a voltage generated in the third capacitor C3. Accordingly, a voltage corresponding to a current flowing through a combined resistance of the first and the second resistor R1 and R2 is generated at a connection node c between the second capacitor C2 and the resistor R2. In this case, by appropriately setting the resistance value of each of the first and the second resistor R1 and R2 and the value of the reference voltage Vref1, it is possible to detect the abnormality (ground-side fault) as described above.

Next, a second feature of the control circuit 20' in accordance with this embodiment will be described. The control circuit 20' includes a comparator 20f having an inverting input terminal to which the output of the first inverting amplifier circuit is inputted and a timer 20m. The comparator 20f outputs a signal corresponding to a result of the comparison of the input voltage with a reference voltage Vref3. For example, if the output voltage of the first inverting amplifier circuit (i.e., a value corresponding to the output current of the power supply device 2) is lower than the reference voltage Vref3, the comparator 20f outputs a signal of high level to the timer 20m. If an input signal from the comparator 20f to the timer 20m continuously has a high level for a predetermined period of time (e.g., 100 ms), the timer 20m changes an output signal from a low level to a high level.

The output signal of the timer 20m is inputted to a NOR circuit 20r. If an input signal to the NOR circuit 20r has a high level, a signal of low level is outputted from the NOR circuit 20r, and the switching element S1 is turned off by this signal of low level to stop the switching operation. In this embodiment, the reference voltage Vref3 is a second reference value (threshold). Further, a latch state of the timer 20m is canceled once, e.g., the power inputted to the power supply device 2 is turned off (power reset).

Here, in a case where a ground-side fault or positive-side fault has occurred at the output terminal T3 or T4, a voltage Vd at a connection node d between the second resistor R2 and the output terminal T4 is zero or a value higher than zero (being a negative potential in a normal state), a detection value of the output current becomes zero. Consequently, a signal of high level is outputted from the comparator 20f. If this signal of high level is continuously outputted for a predetermined period of time, the switching element S1 is turned off to stop the switching operation. Here, the timer 20m is provided to prevent an influence of noise, and the setting time of the timer 20m may be set appropriately depending on the noise expected.

Next, a different part of the control circuit 20' will be described. The control circuit 20' further includes a second inverting amplifier circuit having an operational amplifier 20c, a capacitor C14 and resistors R16 and R17, comparators 20g and 20j having inverting input terminals to which an output of the second inverting amplifier circuit is inputted, a comparator 20h having a non-inverting input terminal to which the output of the second inverting amplifier circuit is inputted, and timers 20n and 20p. The potential of the output terminal T3 (usually a negative potential) is inputted to an inverting input terminal of the operational amplifier 20c of the second inverting amplifier circuit. Then, it is outputted to each of the comparators 20g, 20h and 20j after inversion and amplification.

The comparator 20j compares the output voltage from the second inverting amplifier circuit with a reference voltage Vref6, and outputs a signal corresponding to the comparison result to the AND circuit 20q. For example, in a no-load state (open state) where no lighting load 3 is connected to the output side of the power supply device (lighting device) 2, an output voltage will be abnormally high. Accordingly, the comparator 20j is provided to prevent the circuit from being destroyed by this abnormal voltage. In other words, when the output voltage from the second inverting amplifier circuit is greater than the reference voltage Vref6, the comparator 20j outputs a signal of low level to the AND circuit 20q and turns off the switching element S1 to stop the switching operation. This circuit is also effective when the lighting load 3 itself has an open circuit failure.

Further, the comparator 20h compares the output voltage from the second inverting amplifier circuit with a reference voltage Vref5, and outputs a signal corresponding to the comparison result to the timer 20p. If the signal from the comparator 20h continuously has a high level for a predetermined period of time (e.g., 100 ms), the timer 20p changes an output signal from low level to high level and outputs it to the NOR circuit 20r. Since a signal of low level is correspondingly outputted from the NOR circuit 20r, the switching element S1 is turned off. In other words, if a state where the output voltage is high continues to occur due to, e.g., the open state on the output side, the switching element S1 can be stopped completely by this circuit.

Further, the comparator 20g compares the output voltage from the second inverting amplifier circuit with a reference voltage Vref4, and outputs a signal corresponding to the comparison result to the timer 20n. In the comparator 20g, since the output voltage is inputted to an inverting input terminal, a signal of high level is outputted from the comparator 20g when the output voltage is below the reference voltage Vref4. If the signal from the comparator 20g continuously has a high level for a predetermined period of time (e.g., 100 ms), the timer 20n changes an output signal from a low level to a high level and outputs it to the NOR circuit 20r. In the same manner as above, the switching element S1 is turned off to stop the switching operation. That is, if a short circuit has occurred between the output terminals T3 and T4 or the lighting load 3 has been short-circuited, the output voltage drops, so that the switching element S1 can be stopped completely by detecting such output voltage.

Thus, in accordance with this embodiment, if the potential at the connection node c between the second capacitor C2 and the diode D1 (i.e., the voltage Vc of the second capacitor C2) is greater than the reference voltage Vref1 (first reference value) due to occurrence of a ground-side fault or positive-side fault, the control circuit 20' turns off the switching element S1 to stop the switching operation. Accordingly, it is possible to provide the power supply device 2 with ensured safety. Also, it is possible to provide a lighting device with reduced cost by using the power supply device 2 of this embodiment.

In addition, in a case where a ground-side fault or positive-side fault has occurred, the output current becomes lower than the reference voltage Vref3 (second reference value (threshold)), and if this state is continuously maintained for a predetermined period of time, the control circuit 20' turns off the switching element S1 to stop the switching operation. Thus, it is possible to provide the power supply device 2 with ensured safety.

### (Second Embodiment)

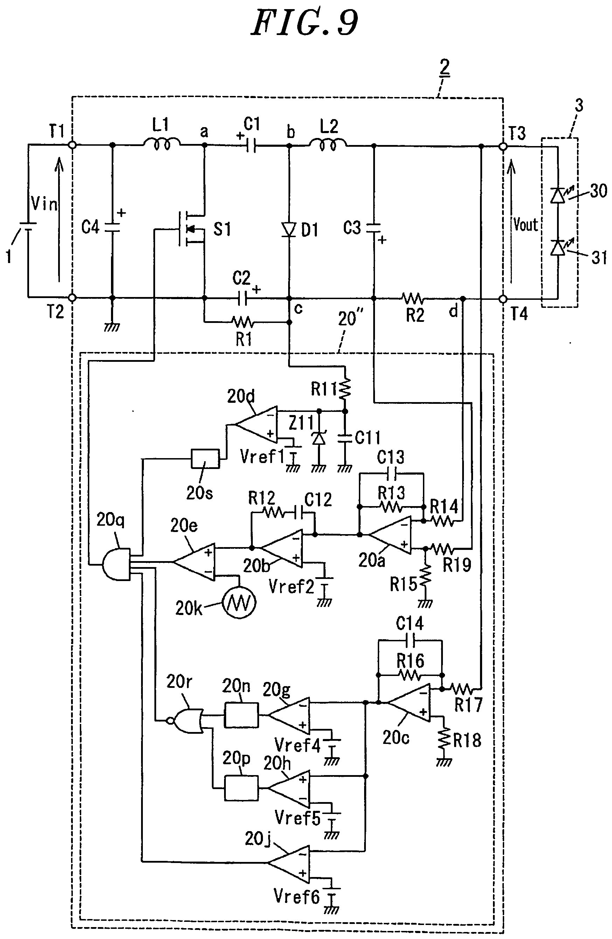

A Second embodiment of the power supply device 2 will be described with reference to FIG. 9.

FIG. 9 is a schematic circuit diagram of the power supply device 2 in accordance with the second embodiment of the present invention, which is an example where the present invention is applied to the lighting device that supplies a lighting power to the lighting load 3 as in the first embodiment described above. Hereinafter, a configuration of a control circuit 20" will be described in detail focusing on the differences between the first and second embodiment. Further, a redundant description of the configuration same as the first embodiment will be omitted.

The control circuit 20" includes a first differential amplifier circuit having an operational amplifier 20a, a capacitor C13 and resistors R13, R14, R15 and R19 and functioning as an output current detection circuit, and a first error operational circuit having an operational amplifier 20b, a capacitor C12 and a resistor R12. Further, the control circuit 20" includes a comparator 20e which compares an output of the first error operational circuit with a high frequency reference oscillation signal of an oscillator (high frequency oscillation circuit) 20k and determines a duty of a driving signal of the switching element S1 such that an output from the first differential amplifier circuit is equal to a reference voltage Vref2. Connected to the input of the operational amplifier 20a of the first differential amplifier circuit are both terminals of the second resistor R2 provided to detect the output current of the power supply device 2, thereby realizing feedback control such that the output current is maintained at a predetermined constant current.

Further, the control circuit 20" includes a comparator 20d having an inverting input terminal to which the voltage Vc of the second capacitor C2 through an RC filter having a resistor R11 and a capacitor C11 is inputted. By comparing the voltage Vc with a reference voltage Vref1, it is possible to detect an abnormality such as the ground-side fault or the positive-side fault that may occur in the output terminal T3 or T4. When the ground-side fault or the positive-side fault is detected, the output of the comparator 20d is changed from a high level to a low level. In this embodiment, the reference voltage Vref1 corresponds to a first reference value.

Further, a state detection circuit 20s is provided on the output side of the comparator 20d, and the output of the state detection circuit 20s is connected to the input of the AND circuit 20q. If the input of the state detection circuit 20s is kept in a low level for a predetermined period of time (e.g., 1 ms), the state detection circuit 20s changes the output thereof from a high level to the low level. Specifically, if the input is kept in the low level for a predetermined period of time (remains the low level for a predetermined period of time), or if the input is repeatedly changed from the high level to the low level for a predetermined period of time (repeats high and low levels for a predetermined period of time), the output of the state detection circuit 20s is changed from the high level to the low level, and this state is maintained (latched).

In accordance with this embodiment, if an abnormality such as the ground-side fault or the positive-side fault has occurred at the output, the switching operation of the switching element S1 can be stopped while preventing the influence of noise, thereby providing the power supply device 2 with ensured safety.

Further, since the differential amplifier circuit is used to detect the output current, the current flowing through the resistor R2 for use in current detection is detected and the switching operation is performed by feedback control such that the detected current corresponds to the reference voltage Vref2. Therefore, even if an abnormality has occurred at the output, it is possible to suppress an excessive current which can flow through the lighting load 3 or the like.

Further, by selecting values of the resistors R1 and R2 and the reference voltage Vref1, even if the ground fault has occurred at the output terminal T4, it can be controlled such that the output current becomes a constant current and the operation can be continuously performed almost without being affected by the ground-side fault. Accordingly, it is possible to provide a lighting device in which a lighting power is kept supplied to the lighting load 3 and its lighting state is maintained as long as possible even if the ground fault has occurred at the output. Specifically, the value of the resistor R2 may be set to be smaller than the value of the resistor R1 (e.g., the resistor R1 of 4.7 Ω and the resistor R2 of 0.22 Ω) and the reference voltage Vref1 may be set to a value higher than a voltage generated across the resistor R2.

Further, in this embodiment, even when the ground-side fault occurs due to the fact that the output terminals T3 and T4 have impedances (e.g., several 10 Ω to several 100 Ω), the switching operation of the switching element S1 can be surely stopped, or the operation can be continuously performed by controlling the output current to be maintained at a constant current, almost without being affected.

Further, although a case where the lighting load 3 having two LED modules has been described as an example in the first and second embodiment, the number of LED modules is not limited to two, and one or three or more LED modules may be provided. Further, a proportional-integral control using the error operational circuit has been used as a method of controlling to maintain a constant current, but it is not limited thereto as long as it can control to maintain a constant current. Further, the control circuit may be configured by using a microcomputer or the like, and may be also configured as a digital feedback control unit. In addition, the lighting device which performs the constant current control has been described as an example, but the present invention may be applied to a lighting device which performs a constant voltage control without being limited to the first and second embodiment.

### (Third Embodiment)

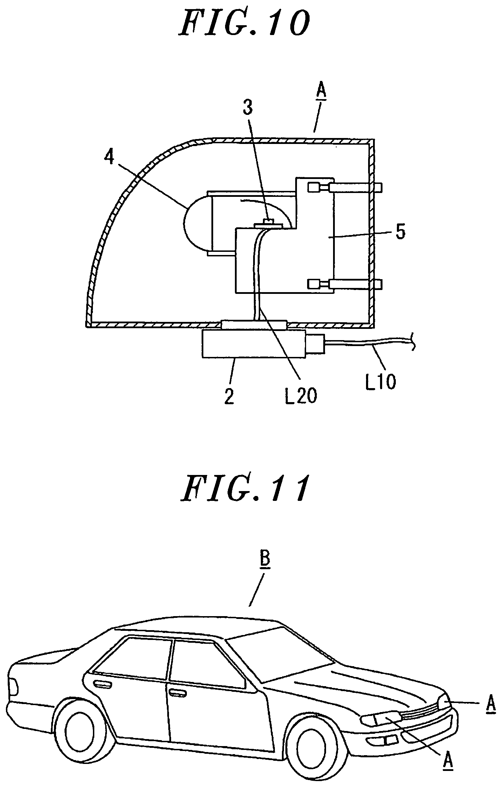

An embodiment of a lamp with the power supply device 2 described in the first to second embodiments will be described with reference to FIG. 10.

FIG. 10 is a cross-sectional view of a headlight (lamp) A for use in a vehicle in accordance with the third embodiment. The headlight A includes, as main elements, the lighting load 3, an optical unit 4 which is formed of a lens or a reflective plate and placed in front of the lighting load 3 (left side in FIG. 10), and the power supply device (lighting device) 2 which supplies a lighting power to the lighting load 3.

The power supply device 2 and the lighting load 3 are electrically connected to each other by an output line L20 so that the lighting power is supplied to the lighting load 3 through the output line L20. Further, a heat sink plate 5 is attached to the lighting load 3, and a heat generated by the lighting load 3 is dissipated to the outside by the heat sink plate 5. The optical unit 4 is intended to control the light distribution of light emitted from the lighting load 3. The power supply device 2 supplies the power from a battery (not shown) provided on the vehicle side through a power line L10.

Here, the heat sink plate 5 may be connected to the ground side of the battery in the vehicle, or a housing of the power supply device 2 for fixation or prevention of noise. Accordingly, a ground-side fault may occur at the output of the power supply device 2. Even in this case, by mounting the power supply device 2 described in the first to second embodiments on the headlight A, it is possible to provide the headlight (lamp) A capable of reducing the cost while ensuring the safety.

In addition, the lamp is not limited to the headlight A of this embodiment, and may be a direction indicator (turn signal) or taillight of a vehicle B that will be described later, or anything other than those.

### (Fourth Embodiment)

An embodiment of a vehicle equipped with the headlight A will be described with reference to FIG. 11.

FIG. 11 is an external perspective view of the vehicle B of this embodiment. The vehicle B is equipped with a pair of the headlights A described in the third embodiment.

In this case, even if cracking of wires, peeling of coating of wires or the like occurs due to, e.g., defects in wires and a ground-side fault or a positive-side fault occurs at the output (output terminal T3 or T4) of the power supply device 2, the switching element S1 is turned off to stop the switching operation as described above. Thus, it is possible to provide the vehicle B capable of reducing the cost while ensuring the safety.

## Claims

1. A power supply device (2) comprising:
a series circuit including a first capacitor (C1), a first inductor (L1), and a second inductor (L2), wherein the first inductor (L1) and the second inductor (L2) are respectively connected to both terminals of the first capacitor (C1);
a switching element (S1), a terminal of which is connected to a connection node (a) between a terminal of the first inductor (L1) and the first capacitor (C1);
a rectifier (D1) whose anode is connected to a connection node (b) between the first capacitor (C1) and a terminal of the second inductor (L2); and
a second capacitor (C2) connected between another terminal of the switching element (S1) and a cathode of the rectifier (D1),
wherein another terminal of the first inductor (L1) is adapted to be connected to a positive electrode side of a DC power supply source (1), and the another terminal of the switching element (S1) is adapted to be connected to a negative electrode side of the DC power supply source (1), and
wherein another terminal of the second inductor (L2) is adapted to be connected to a terminal of a load (3) and an output terminal (T4) of the power supply device (2) is adapted to be connected to another terminal of the load (3); the power supply device (2) being **characterized in that**:
the power supply device (2) further comprises:
a connection node (c) between the second capacitor (C2) and the cathode of the rectifier (D1);
a resistor (R2) connected between the output terminal (T4) and the connection node (c); and
a control circuit (20') being adapted to perform feedback control of a periodic switching operation of the switching element (S1) and including
an output current detection circuit (20a, R13, C13, R15) detecting an output current of the power supply device (2) based on a potential generated across the resistor (R2), the output current detection circuit including an operational amplifier (20a); a first comparator (20f) receiving a reference voltage (Vref3) and an output voltage of the output current detection circuit and
wherein the control circuit (20') is adapted to turn off the switching element (S1) thereby stopping the periodic switching operation of the switching element (S1) when an output of the comparator (20f) indicating that the output voltage of the output current detection circuit is lower than the reference voltage (Vref3) is continuously maintained for a predetermined period of time.

2. The power supply device (2) of claim 1, further comprising:
a further resistor (R1) connected in parallel to the second capacitor (C2).

3. The power supply device (2) of claim 1 or 2, wherein an electrostatic capacitance of the second capacitor (C2) is greater than an electrostatic capacitance of the first capacitor (C1).

4. The power supply device (2) of any one of claims 1 to 3,
wherein the control circuit (20') further includes a second comparator (20d) to which a potential (Vc) at the connection node (c) and a second reference voltage (Vref1) are inputted,
wherein the control circuit (20') is adapted to turn off the switching element (S1) thereby stopping the periodic switching operation of the switching element (S1) when an output of the second comparator (20d) indicates that the potential (Vc) at the connection node (c) is higher than the second reference voltage (Vref1).

5. The power supply device (2) of any one of claims 1 to 4, wherein the load (3) includes one or more semiconductor light emitting elements.

6. A lamp (A) comprising the power supply device (2) according to any one of claims 1 to 4.

7. A vehicle (B) comprising the lamp (A) according to claim 6.

## Patentansprüche

1. Stromversorgungseinrichtung (2) umfassend:
eine Reihenschaltung, die einen ersten Kondensator (C1), einen ersten Induktor (L1) und einen zweiten Induktor (L2) enthält, wobei der erste Induktor (L1) und der zweite Induktor (L2) jeweils mit beiden Anschlüssen des ersten Kondensators (C1) verbunden sind;
ein Schaltelement (S1), bei dem ein Anschluss mit einem Verbindungsknoten (a) zwischen einem Anschluss des ersten Induktors (L1) und dem ersten Kondensator (C1) verbunden ist;
einen Gleichrichter (D1), dessen Anode mit einem Verbindungsknoten (b) zwischen dem ersten Kondensator (C1) und einem Anschluss des zweiten Induktors (L2) verbunden ist; und
einen zweiten Kondensator (C2), der zwischen einem anderen Anschluss des Schaltelements (S1) und einer Kathode des Gleichrichters (D1) verbunden ist,
wobei ein weiterer Anschluss des ersten Induktors (L1) angepasst ist, mit einer positiven Elektrodenseite einer Gleichstromversorgungsquelle (1) verbunden zu werden, und der andere Anschluss des Schaltelements (S1) angepasst ist, mit einer negativen Elektrodenseite der Gleichstromversorgungsquelle (1) verbunden zu werden, und
wobei ein anderer Anschluss des zweiten Induktors (L2) angepasst ist, mit einem Anschluss einer Last (3) verbunden zu werden und ein Ausgangsanschluss (T4) der Stromversorgungseinrichtung (2) angepasst ist, mit einem anderen Anschluss der Last (3) verbunden zu werden;
wobei die Stromversorgungseinrichtung (2) **dadurch gekennzeichnet ist, dass**:
die Stromversorgungseinrichtung (2) ferner umfasst:
einen Verbindungsknoten (c) zwischen dem zweiten Kondensator (C2) und der Kathode des Gleichrichters (D1);
einen Widerstand (R2), der zwischen dem Ausgangsanschluss (T4) und dem Verbindungsknoten (c) verbunden ist; und
eine Steuerschaltung (20'), die angepasst ist, um eine Rückkopplungssteuerung eines periodischen Schaltvorgangs des Schaltelements (S1) durchzuführen, und die Folgendes beinhaltet,
eine Ausgangsstromerfassungsschaltung (20a, R13, C13, R15), die einen Ausgangsstrom der Stromversorgungseinrichtung (2) basierend auf einem über den Widerstand (R2) erzeugten Potential erfasst, wobei die Ausgangsstromerfassungsschaltung einen Operationsverstärker (20a) enthält;
einen ersten Komparator (20f), der eine Referenzspannung (Vref3) und eine Ausgangsspannung der Ausgangsstromerfassungsschaltung empfängt und
wobei die Steuerschaltung (20') angepasst ist, um das Schaltelement (S1) auszuschalten und dadurch den periodischen Schaltvorgang des Schaltelements (S1) zu stoppen, wenn ein Ausgang des Komparators (20f), der anzeigt, dass die Ausgangsspannung der Ausgangsstromerfassungsschaltung niedriger ist als die Referenzspannung (Vref3), für einen vorbestimmten Zeitraum kontinuierlich gehalten wird.

2. Stromversorgungseinrichtung (2) nach Anspruch 1, ferner umfassend:
einen weiteren Widerstand (R1), der mit dem zweiten Kondensator (C2) parallel verbunden ist.

3. Stromversorgungseinrichtung (2) nach Anspruch 1 oder 2, bei der eine elektrostatische Kapazität des zweiten Kondensators (C2) größer ist als eine elektrostatische Kapazität des ersten Kondensators (C1).

4. Stromversorgungseinrichtung (2) nach einem der Ansprüche 1 bis 3, bei der die Steuerschaltung (20') ferner enthält
einen zweiten Komparator (20d), an dem ein Potential (Vc) am Anschlussknoten (c) und eine zweite Referenzspannung (Vref1) eingegeben sind,
wobei die Steuerschaltung (20') angepasst ist, um das Schaltelement (S1) auszuschalten und dadurch den periodischen Schaltvorgang des Schaltelements (S1), wenn ein Ausgang des zweiten Komparators (20d), der anzeigt, dass das Potential (Vc) am Verbindungsknoten (c) höher ist als die zweite Referenzspannung (Vrefl), zu stoppen.

5. Stromversorgungseinrichtung (2) nach einem der Ansprüche 1 bis 4, bei der die Last (3) ein oder mehrere lichtemittierende Halbleiterelemente enthält.

6. Lampe (A), umfassend die Stromversorgungseinrichtung (2) nach einem der folgenden Ansprüche 1 bis 4.

7. Fahrzeug (B), umfassend die Lampe (A) gemäß Anspruch 6.

## Revendications

1. Dispositif d'alimentation en energie (2) comprenant :
un circuit en serie incluant un premier condensateur (C1), un premier inducteur (L1) et un second inducteur (L2), dans lequel le premier inducteur (L1) et le second inducteur (L2) sont respectivement relies aux deux bornes du premier condensateur (C1) ;
un element de commutation (S1), dont une borne est reliee a un nceud de liaison (a) entre une borne du premier inducteur (L1) et le premier condensateur (C1) ;
un redresseur (D1) dont l'anode est reliee a un nceud de liaison (b) entre le premier condensateur (C1) et une borne du second inducteur (L2) ; et
un second condensateur (C2) relie entre une autre borne de l'element de commutation (S1) et une cathode du redresseur (D1),
dans lequel une autre borne du premier inducteur (L1) est adaptee pour etre reliee a un cote d'electrode positive d'une source d'alimentation en energie CC (1), et l'autre borne de l'element de commutation (S1) est adaptée pour etre reliee a un cote d'electrode negative de la source d'alimentation en energie CC (1), et
dans lequel une autre borne du second inducteur (L2) est adaptee pour etre reliee a une borne d'une charge (3) et une borne de sortie (T4) du dispositif d'alimentation en energie (2) est adaptee pour etre reliee a une autre borne de la charge (3)
le dispositif d'alimentation en energie (2) etant **caracterise en ce que**
le dispositif d'alimentation en energie (2) comprend en outre :
un nreud de liaison (c) entre le second condensateur (C2) et la cathode du redresseur (Dl)
une resistance (R2) reliee entre la borne de sortie (T4) et le nreud de liaison (c) ; et
un circuit de commande (20') etant adapte pour realiser une commande de retroaction d'une manreuvre de commutation periodique de l'element de commutation (S1) et incluant un circuit de detection de courant de sortie (20a, R13, C13, R15) detectant un courant de sortie du dispositif d'alimentation en energie (2) sur la base d'un potentiel genere a travers la resistance (R2), le circuit de détection de courant de sortie incluant un amplificateur opérationnel (20a) ;
un premier comparateur (20f) recevant une tension de reference (Vref3) et une tension de sortie du circuit de detection de courant de sortie et
dans lequel le circuit de commande (20') est adapte pour eteindre l'element de commutation (S1) arrêtant de ce fait la manreuvre de commutation periodique de l'element de commutation (S1) lorsqu'une sortie du comparateur (20f) indiquant que la tension de sortie du circuit de détection de courant de sortie est inférieure a la tension de reference (Vref3) est maintenue de fac; on continue pour une duree predeterminee.

2. Dispositif d'alimentation en energie (2) selon la revendication 1, comprenant en outre :
une autre resistance (R1) reliee en paralle le au second condensateur (C2).

3. Dispositif d'alimentation en energie (2) selon la revendication 1 ou 2, dans lequel une capacite electrostatique du second condensateur (C2) est superieure a une capacite electrostatique du premier condensateur (C1).

4. Dispositif d'alimentation en energie (2) selon l'une quelconque des revendications 1 a 3,
dans lequel le circuit de commande (20') inclut en outre un second comparateur (20d) dans lequel sont entres un potentiel (Vc) au niveau du nceud de liaison (c) et une seconde tension de reference (Vrefl),
dans lequel le circuit de commande (20') est adapte pour eteindre l' element de commutation (S1) arretant de ce fait la manoeuvre de commutation periodique de l'element de commutation (S1) lorsqu'une sortie du second comparateur (20d) indique que le potentiel (Vc) au niveau du nceud de liaison (c) est superieur a la seconde tension de reference (Vref1).

5. Dispositif d'alimentation en energie (2) selon l'une quelconque des revendications 1 a 4, dans lequel la charge (3) inclut un ou plusieurs elements électroluminescents semi-conducteurs.

6. Lampe (A) comprenant le dispositif d'alimentation en energie (2) selon l'une quelconque des revendications 1 a 4.

7. Vehicule (B) comprenant la lampe (A) selon la revendication 6.
